# EUROPÄISCHE PATENTSCHRIFT

(11) **EP 0 793 984 B1**
(45) Veröffentlichungstag und Bekanntmachung des Hinweises auf die Patenterteilung: **12.11.2003**
(21) Anmeldenummer: 97103440.0
(22) Anmeldetag: 03.03.1997
(51) Int. Cl.: A63C 17/26

(54) **Sportgerät mit Beleuchtungseinrichtung**
Sport apparatus with lighting device
Appareil de sport avec dispositif d'éclairage

(30) Priorität: 05.03.1996 CH 56696; 01.08.1996 CH 190196
(43) Veröffentlichungstag der Anmeldung: 10.09.1997
(73) Patentinhaber: Lumpert, Jürg B., 8038 Zürich (CH)
(72) Erfinder: Lumpert, Jürg B., 8038 Zürich (CH)
(74) Vertreter: OK pat AG

(56) Entgegenhaltungen:
- US-A- 2 505 154
- US-A- 4 298 910
- US-A- 4 363 502
- US-A- 4 648 610
- US-A- 5 456 478

## Beschreibung

Die Erfindung bezieht sich auf ein Sportgerät gemäß dem Oberbegriff des Anspruchs 1 und auf eine Beleuchtungseinrichtung gemäß dem Oberbegriff des Auspruchs 5.

Solche Sportgeräte haben in verschiedenen Formen große Verbreitung gefunden. Es gibt sie seit langer Zeit als Rollschuhe und später kamen Abwandlungen in Form von Rollbrettern und den sogenannten Inline Skates in Gebrauch.

Die Benutzer solcher Sportgeräte bewegen sich damit in der Öffentlichkeit, namentlich in Fußgängerbereichen, aber auch auf Straßen. Bei Dunkelheit sind sie schlecht erkennbar und stellen damit, auch wegen der erreichbaren größeren Geschwindigkeit, eine Gefahrenquelle dar. Um Aufmerksamkeit zu erregen, wenden sie Benutzer solcher Sportgeräte auffällige Kleidung und reflektierende Elemente wie Kleidungsbesatzstücke an.

Aus US-A-5,484,164 ist ein solches Sportgerät bekannt, an dem mehrere Beleuchtungseinrichtungen wie etwa Frontlicht und Rücklicht angebracht sind, die aus einer Batterie gespeist werden.

Aus dem US-Patent US-A-4,363,502 ist ein Rollschuhrad bekannt, das einen Spannungsgenerator mit einer Spule und einem Magnet aufweist. Die Spule sitzt auf einem Stator und der Magnet ist ringförmig ausgelegt. Mit dem Spannungsgenerator erzeugt eine Spannung, die eine Lampe im Rollschuhrad zum Leuchten bringen kann.

Der Erfindung liegt die Aufgabe zugrunde, ein Sportgerät der vorgenannten Art zu schaffen, das in sich insbesondere bei Dunkelheit einen hohen Aufmerksamkeitsgrad erreicht, ohne daß eine Batterie zum Betrieb einer Beleuchtungseinrichtung nötig ist. Im Rahmen der Erfindung liegt es auch, bestehende Sportgeräte entsprechend verbessernd auszugestalten.

Die genannte Aufgabe wird erfindungsgemäß durch die Merkmale des Anspruchs 1 und 5 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: ein Schema eines Inline Skates,
- Fig. 2: ein Schema eines Rades in einem Laufwerk,
- Fig. 3: einen Spannungsverlauf,
- Fig. 4: ein elektrisches Schaltbild,
- Fig. 5: einen schematischen Aufbau eines Rades,
- Fig. 6 und 7: Schemata weiterer Beispiele,
- Fig. 8: ein Schema eines Rades eines weiteren Beispiels,
- Fig. 9: ein Schema eines Generators zur Spannungserzeugung,
- Fig. 10 bis 12: Einzelheiten eines bevorzugten Spannungsgenerators, gemäss Erfindung.

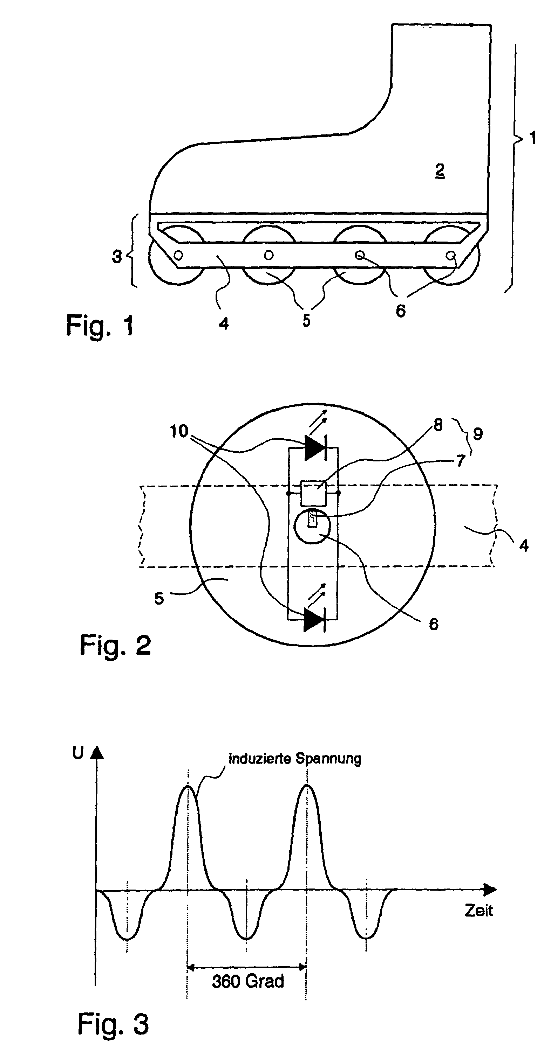

In der Figur 1 bedeutet 1 ein Inline Skate als Beispiel eines Sportgeräts der gattungsgemäßen Art. Dieses Inline Skate 1 besteht aus einem Schuh 2 und einem Laufwerk 3. Das Laufwerk 3 besteht aus einem Rahmen 4, welcher eine Anzahl von Rädern 5 aufweist, die um Achsen 6 drehbar sind. Die Achsen 6 sind starr mit dem Rahmen 4 verbunden. Etwa vorhandene Kugellager sind in der Figur 1 und nachfolgenden Figuren nicht dargestellt.

In der Figur 2 ist ein Detail aus der Figur 1 dargestellt, wobei gleiche Teile mit gleichen Bezugszeichen bezeichnet sind. Innerhalb der Achse 6 ist ein Permanentmagnet 7 angeordnet. Im Rad 5 ist eine Spule 8 angeordnet. Die Spule 8 bildet zusammen mit dem Permanentmagneten 7 einen Spannungsgenerator 9, der elektrischen Strom erzeugt, sobald sich die Spule 8 relativ zum Permanentmagneten 7 bewegt. Dies ist der Fall, wenn sich das Sportgerät 1 auf einer festen Unterlage bewegt, so daß sich das Rad 5 dreht. Beim bestimmungsgemäßen Gebrauch des Sportgeräts wird also elektrische Energie erzeugt. Mit dieser elektrischen Energie wird eine Beleuchtungseinrichtung betrieben, die gemäß Figur 2 aus einer Anzahl von Leuchtdioden 10 besteht In der Figur 2 sind zwei solcher Leuchtdioden 10 dargestellt. Die Katoden der Leuchtdioden 10 sind elektrisch mit einem Anschluß der Spule 8, die Anoden mit einem zweiten Anschluß der Spule 8 verbunden.

In der Figur 3 ist der Verlauf der Spannung an der Spule 8 dargestellt, wenn sich das Rad 5 mit der Spule 8 um die Achse 6 mit dem Permanentmagneten 7 dreht. Die Figur zeigt in einer Kurve die Höhe der in der Spule 8 induzierten Spannung. Der Momentanwert der Spannung erreicht ein Maximum, wenn sich die Spule 8 in der größten Nähe zum Permanentmagneten 7, also genau gegenüber dem Permanentmagneten 7, befindet. Die Spannung erreicht den Wert Null, wenn sich das Rad 5 gegenüber der vorgenannten Position um 90 Grad gedreht hat. Bei weiterer Drehung wird wiederum eine Spannung induziert, die aber entgegengesetzt ist, da sich die Lage der Spule 8 gegenüber dem Permanentmagneten 7 so geändert hat, daß nun der andere Magnetpol zur Spule 8 zeigt. Bei einer Drehung um 180 Grad gegenüber der erstgenannten Position wird ein weiterer Extremwert der Spannung erreicht, der aber infolge des größeren Abstands zwischen Spule 8 und Permanentmagnet 7 geringer ist als das Maximum in der erstgenannten Position.

Es ist aus der Figur 3 ersichtlich, daß es sich bei der in der Spule 8 induzierten Spannung um eine Wechselspannung handelt, deren Frequenz in Hertz der Anzahl der Umdrehungen pro Sekunde entspricht. Da die erzeugte Spannung nicht gleichgerichtet und auch nicht mittels eines Kondensators geglättet wird, wird diese Wechselspannung unmittelbar den Leuchtdioden 10 zugeführt. Aus dem Spannungsverlauf ergibt sich, daß die Leuchtdioden 10 nicht mit gleichmäßiger Intensität leuchten, sondern abwechselnd leuchten und verlöschen. Die Leuchtdioden 10 leuchten nur so lange, als die induzierte Spannung zu einem Strom in Durchflußrichtung führt. Da die Leuchtdioden 10 in der Sperrichtung keinen Strom durchlassen, bleiben die Leuchtdioden 10 dunkel, solange die Spannung umgepolt ist. Es ergibt sich also ein Blinken der Leuchtdioden 10, dessen Rhythmus der Frequenz und damit der Fahrgeschwindigkeit des Sportgeräts 1 proportional ist. Da auch die Höhe der Spitzenspannung eine Funktion der Drehgeschwindigkeit der Räder 5 ist, ist das Blinken um so heller, je größer die Fahrgeschwindigkeit ist. Erfindungsgemäß ergibt sich also ein Blinken, das bekanntermaßen mehr Auffälligkeit und Aufmerksamkeit erregt als ein gleichmäßiges Leuchten. Da die Blinkfrequenz und auch die Helligkeit mit zunehmender Geschwindigkeit größer werden, wird in vorteilhafter Weise das Erregen von Aufmerksamkeit mit zunehmender Geschwindigkeit gesteigert.

Wird der Permanentmagnet 7 innerhalb der Achse 6 so angeordnet, daß seine beiden Pole gleich weit bis an die Oberfläche der Achse 6 heranreichen, so ist der entstehende Spannungsverlauf symmetrisch, d.h. der positive und der negative Maximalwert der induzierten Spannung sind gleich. Eine solche Lösung ist vorteilhaft, weil dann die positiven und die negativen Teile der Spannung zur Lichtgewinnung herangezogen werden können, indem zwei Gruppen von Leuchtdioden 10 antiparallel zusammengeschaltet werden, wobei beide Gruppen von Leuchtdioden 10 gleich hell leuchten. Eine solche Lösung hat außerdem den Vorteil, daß kein Unterschied zwischen Vorwärts- und Rückwärtsbewegung des Sportgeräts 1 besteht.

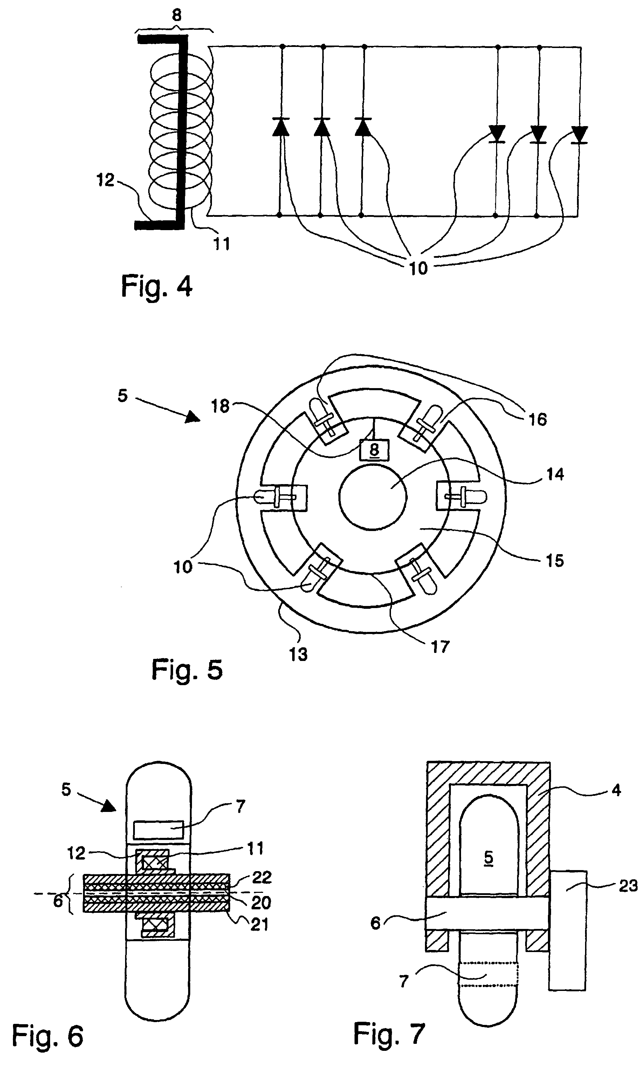

In der Figur 4 ist ein elektrisches Schaltbild für eine solche Lösung dargestellt. Die Spule 8 besteht vorteilhaft aus einer Wicklung 11 und einem Weicheisen-Magnetkreis 12, der in bekannter Weise aus einem Spulenkern und Polschuhen gebildet ist. An die beiden Enden der Wicklung 11 sind mittels elektrischer Drähte die Leuchtdioden 10 parallel in zwei Gruppen angeschlossen, wobei die zweite Gruppe gegenüber der ersten Gruppe antiparallel geschaltet ist. Beide Gruppen von Leuchtdioden 10 umfassen je drei Leuchtdioden 10.

Der Permanentmagnet 7 ist vorteilhaft ein Dauermagnet mit hoher Koerzitivfeldstärke, etwa auf der Basis von Seltenen Erden, beispielsweise des Typs NdFeB. In gleicher Weise kann aber auch ein Samarium-Kobalt-Magnet Verwendung finden. Vorteilhaft ist, wenn die Koerzitivfeldstärke einen Wert von etwa 830 kA/m aufweist. Als Leuchtdioden 10 kommen vorteilhaft Typen mit einer hohen Lichtausbeute von 3 Candela bei einem Strom von 20 mA zur Anwendung.

Vorteilhaft ist es, wenn die Wicklung 11 so bemessen ist, daß deren Innenwiderstand so groß ist, daß der Strom, den die induzierte Spannung bewirkt, einen für den Betrieb der Leuchtdioden 10 zulässigen Wert nicht überschreitet. Dadurch kann auf weitere Bauteile wie etwa Widerstände zur Strombegrenzung verzichtet werden. Dadurch wird auch erreicht, daß keine elektrische Energie in Widerständen vernichtet werden muß, so daß die ganze erzeugte Energie der Lichtgewinnung dienen kann. Es hat sich beispielsweise als vorteilhaft ergeben, wenn die Wicklung 11 einen Kerndurchmesser von etwa 4 mm aufweist, was einem Kernumfang von etwa 13 mm entspricht. Bei einer Wicklungslänge von etwa 12 mm wird eine optimale Abstimmung zwischen der Spule 8 und den von ihr mit Strom versorgten sechs Leuchtdioden 10 erreicht, wenn 3300 Windungen mit einem Draht von 0,1 mm gewickelt werden.

Alternativ kann aber auch zwischen die Wicklung 11 der Spule 8 und die Leuchtdioden 10 eine elektronische Schaltung geschaltet sein, die beispielsweise eine Pufferkapazität und einen elektronischen Blinkgeber enthält.

In der Figur 5 ist schematisch der Aufbau eines Rades 5 gezeigt. Die Außenkontur des Rades 5 ist mit der Bezugszahl 13 bezeichnet, der Innendurchmesser mit der Bezugszahl 14. Das Rad 5 weist einen Kern 15 auf, der im wesentlichen tragende Funktion hat. Der Kern 15 weist eine Anzahl von Aussparungen 16 auf, die dazu dienen, freien Raum für den Einbau der Leuchtdioden 10 zu schaffen. Die Leuchtdioden 10 werden von zwei Drahtringen 17 gehalten, die der Zuführung der Spannung zu den Leuchtdioden 10 dienen. Die beiden Drahtringe 17 liegen in verschiedenen Ebenen, so daß in der Seitenansicht der Figur 5 nur einer der Drahtringe 17 sichtbar ist. Von jedem der Drahtringe 17 führt je ein Draht 18 zu je einem der beiden Anschlüsse der Spule 8. Der gemäß dieser Beschreibung aufgebaute Radrohling wird mit einem transparenten, zähleastischem und abriebfesten Plastikmaterial umspritzt. Dadurch bleiben beim fertigen Rad 5 die Leuchtdioden 10 von außen sichtbar, so daß deren Leuchten von außen wahrgenommen werden kann. Als Plastikmaterial eignet sich beispielsweise Polyurethan.

Um den Lichteffekt bei sich drehendem Rad 5 zu verstärken, ist es vorteilhaft, dem zu spritzenden Plastikmaterial reflektierende Teilchen wie Metallglimmerstücke beizumischen. Das von den Leuchtdioden 10 emittierte Licht wird von diesen Teilchen reflektiert, so daß der Lichteffekt verstärkt wird.

Das erfindungsgemäße Prinzip läßt sich bei allen derartigen Sportgeräten anwenden, bei denen Räder 5 um feststehende Achsen 6 drehbar sind und beim bestimmungsgemäßen Gebrauch auch in Drehung versetzt werden.

Es sind im Rahmen der Erfindung auch viele andere Ausgestaltungen möglich. So ist es beispielsweise praktikabel, daß der Permanentmagnet 7 im Körper des Rades 5 nahe dessen Umfangslinie angeordnet ist, während mindestens eine Spule 8 am Laufwerksträger 4 an einem Punkt in der Nähe der Umfangslinie des Rades 5 befestigt ist. Sind beispielsweise zwei Spulen 8 gegeneinander versetzt angeordnet, so ist die Ausbeute an elektrischer Energie und damit die Lichtleistung entsprechend größer, was der Erhöhung der Auffälligkeit zugute kommt. Um durch die Anordnung des Permanentmagneten 7 in der Nähe des Radumfangs keine zu große Unwucht zu erzeugen, ist vorteilhaft der Radkörper entsprechend zu gestalten, die Masse des Permanentmagneten 7 durch eine entsprechende Masse auf der gegenüberliegenden Seite auszugleichen. Es können auch mehrere Permanentmagnete 7 vorgesehen werden.

In der Figur 6 ist ein weiteres Beispiel schematisch dargestellt. Die Achse 6 besteht hierbei aus einem metallischen Kern 20 und einem ebenfalls metallischen Rohrabschnitt 21, die durch eine Isolierschicht 22 voneinander getrennt sind. Diese Konstruktion ermöglicht es, die Achse 6 als zweipoligen Leiter zu verwenden. Die Wicklung 11 mit dem zugeordneten Magnetkreis 12 ist starr auf der Achse 6 befestigt. Das eine Ende der Wicklung 11 ist in geeigneter Weise (nicht dargestellt) mit dem Kern 20 verbunden, während das andere Ende der Wicklung 11 mit dem Rohrabschnitt 21 verbunden ist (nicht dargestellt). An den Enden der Achse 6 ist somit am Kern 20 und am Rohrabschnitt 21 die in der Wicklung 11 erzeugte elektrische Energie abgreifbar. Somit ist es möglich, entsprechende elektrische Leiter vorzusehen, die die elektrische Energie zu einem am Rahmen 4 oder an einer anderen Stelle des Sportgeräts 1 angeordneten Bauteil leiten. Damit besteht im Hinblick auf die gestalterische Ausbildung des Sportgeräts 1 eine gewisse Freiheit.

In der Figur 7 ist ein weiteres Beispiel schematisch dargestellt. Hierbei ist der Permanentmagnet 7 in einer Bohrung des Rades 5 angeordnet. Die nicht dargestellte Spule 8 und die lichtemittierenden Elemente 10 befinden sich in einer Baugruppe 23, die in geeigneter Weise am Rahmen 4 befestigt ist. Bei entsprechender Ausbildung des Rahmens 4 kommt hierbei vorteilhaft eine Schnapp- oder Klemmverbindung in Frage. Dadurch wird erreicht, daß ein schon vorhandenes Sportgerät auf einfache Weise mit einer Beleuchtungseinrichtung nach der Erfindung ergänzt werden kann. So ist es möglich, in eines der Räder 5 des Sportgeräts 1 ein Loch geeigneter Größe zu bohren und den Permanentmagneten 7 in dieses Loch einzukleben.
Die Baugruppe 23 wird dann am Rahmen 4 so befestigt, daß sich deren Spule 8 im Wirkungsbereich des Permanentmagneten 7 befindet. Statt eines Loches und eines Permanentmagneten 7 können deren auch mehrere vorgesehen sein.

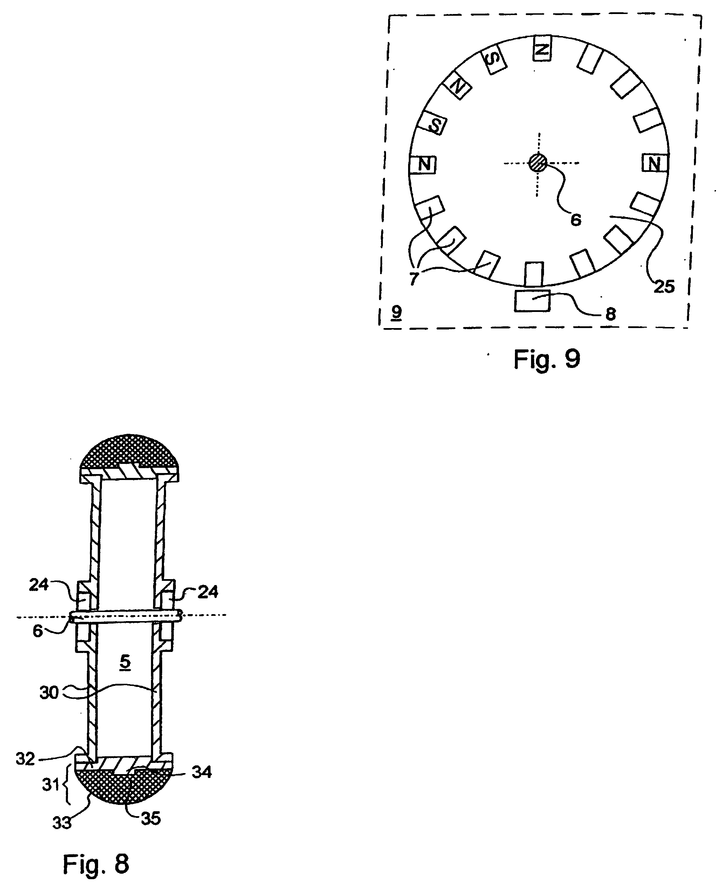

In der Figur 8 ist der Aufbau eines Rades 5 aus mechanischen Einzelteilen gezeigt, durch den der Platzbedarf für die zuvor genannten Elemente gedeckt werden kann. Das Rad 5 besteht aus zwei Radscheiben 30 und einem diese umgebenden und verbindenden Radreifen 31, der seinerseits aus einem Träger 32 und einem Laufkörper 33 zusammengesetzt ist. Dabei weist der Träger 32 Formstücke 34 auf, in die Vertiefungen 35 des Laufkörpers eingreifen. Die Formstücke 34 und die Vertiefungen 35 sind räumlich so gestaltet, daß sie das Verrutschen des Laufkörpers 33 auf dem Träger 32 verhindert, und zwar sowohl in Umfangsrichtung als auch in seitlicher Richtung. Die Formstücke 34 sind um Träger 32 unmittelbar angeformt. So kann der Träger 32 beispielsweise ein entsprechend gestaltetes Guß-, Preß-, Spritz- oder Druckgußteil sein. Die Vertiefungen des Laufkörpers 33 ergeben sich zwangsweise, wenn die Herstellung des Radreifen 31 auf eine solche Weise erfolgt, daß der Träger 32 in einem entsprechenden Werkzeug umspritzt wird. Dabei wird eine innige Verbindung zwischen Träger 32 und Laufkörper 33 erreicht.

In einer passenden zentrischen Vertiefung jeder Radscheibe 30 ist ein Kugellager 24 eingepaßt. Der innere Ring des Kugellagers 24 ist mit der Achse 6 verbunden. Die Radscheiben 30 sind mit dem Radreifen 31 fest verbunden, wobei in Analogie zur vorgenannten Gestaltung des Radreifens 31 die ineinandergreifenden Flächen von Radscheiben 30 und Radreifen 31 so gestaltet sind, daß sowohl das Verrutschen des Radreifens 31 in Umfangsrichtung als auch das Verdrehen der beiden Radscheiben 30 gegeneinander unmöglich ist Das kann beispielsweise durch entsprechende Nuten, Kerben und dergleichen geschehen.

In der Figur 9 ist der Spannungsgenerator 9 als Beispiel schematisch dargestellt. Er besteht aus der Spule 8 und einer Anzahl von Permanentmagneten 7. Die Permanentmagnete 7 sind entlang der Umfangslinie des Stators 25 angeordnet. Der Stator 25 ist mit der Achse 6 starr verbunden. Da die Achse 6 im nicht dargestellten Laufwerk starr befestigt ist, steht also auch der Stator 25 starr im Laufwerk, dreht sich also bei sich drehendem Rad 5 nicht mit. Hingegen ist die Spule 8 mit dem sich drehenden Rad 5 verbunden. Die Spule 8 ist der Umfangslinie des Stators 25 unmittelbar benachbart. Die Zahl der Permanentmagnete 7, die sich über den Umfang des Stators 25 gleichmäßig verteilt, ist geradzahlig und jeweils benachbarte Permanentmagnete 7 sind entgegengesetzt magnetisiert. Bei sich drehendem Rad 5 wird somit in der Spule 8 eine elektrische Spannung induziert. Der verbleibende Luftspalt zwischen Permanentmagneten 7 und Spule 8 soll möglichst klein sein.

Um eine möglichst große Menge elektrischer Energie gewinnen zu können, kann es vorteilhaft sein, mehrere Spulen 8 vorzusehen. So kann die Zahl der Spulen 8 halb so groß sein wie die Zahl der Permanentmagnete 7. In einem solchen Fall sind die Spulen 8 wie die Permanentmagnete 7 gleichmäßig über den Umfang verteilt, so daß der Abstand von Spule 8 zu Spule 8 im Bogenmaß doppelt so groß ist wie der Abstand von Permanentmagnet 7 zu Permanentmagnet 7 im Bogenmaß. Im vorgenannten Fall werden die einzelnen Spulen 8 vorteilhaft allesamt parallel geschaltet. Dieses Beispiel hat den Vorteil, daß die Ausbeute an elektrischer Energie größer ist als beim Vorhanden sein nur einer Spule 8.

Die Zahl der Spulen 8 kann aber auch gleich groß sein wie die Zahl der Permanentmagnete 7. Die Abstände im Bogenmaß sind dann allesamt gleich. In einem solchen Fall ist es vorteilhaft, jeweils Zweiergruppen von benachbarten Spulen 8 zu bilden und die beiden Spulen 8 antiparallel oder mit unterschiedlichem Wickelsinn in Reihe zu schalten. Alle diese Zweiergruppen sind dann parallel geschaltet.

Die Zahl der Permanentmagnete 7 beträgt beispielsweise 16. Bei 8 der Permanentmagnete 7 liegt somit der magnetische Nordpol N auf der Vorderseite des Stators 25 und der magnetische Südpol auf der Rückseite. Vorder- und Rückseite beziehen sich dabei auf die Ansicht gemäß Figur 9. Bei den übrigen 8 Permanentmagneten 7 ist es umgekehrt. Im Rahmen der Erfindung sind andere Magnetisierungsrichtungen und Spulenanordnungen möglich.

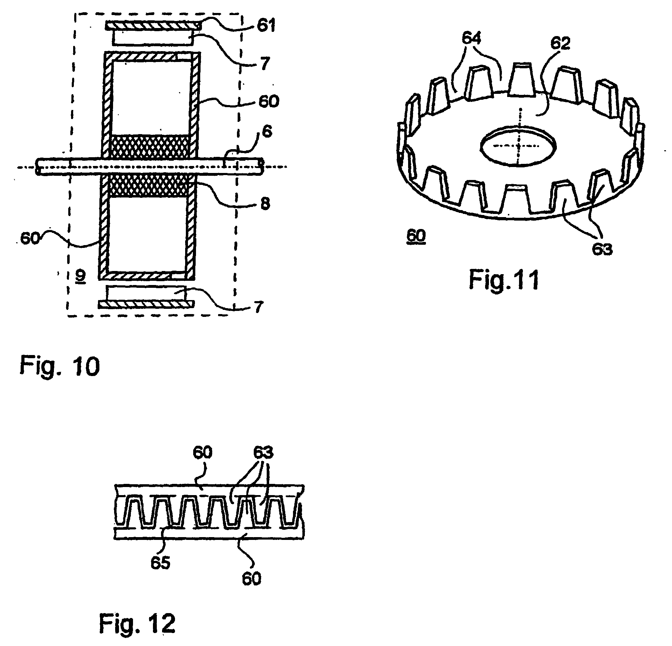

In der Figur 10 ist eine im Hinblick auf große Ausbeute elektrischer Energie ganz besonders vorteilhafte Ausführungsform des Spannungsgenerators 9 in einer Schnittzeichnung gezeigt. Mit der Achse 6 starr verbunden sind zwei Polsterne 60, wobei der zweite Polstern 60 gegenüber dem ersten Polstern 60 um 180° gewendet ist. Beide Polsterne 60 bilden zusammen eine Art Käfig. Zwischen den beiden Polsternen 60, also innerhalb dieses Käfigs, ist um die Achse 6 die Spule 8 gewickelt, an deren nicht dargestellten beiden Drahtenden die vom Spannungsgenerator 9 erzeugte elektrische Energie abgreifbar ist. Um den zylindrischen Mantel dieses Käfigs herum liegt ein Ring 61, der mit dem hier nicht dargestellten Rad 5 fest verbunden ist, sich also mit dem Rad 5 um die feststehende Achse 6 dreht. Auf der Innenseite dieses Rings 61 sind die Permanentmagnete 7 angeordnet. Auf die Innenseite des Rings 61 sind beispielsweise 12 oder 16 Permanentmagnete 7 gleichmäßig verteilt, wobei wie beim zuvor beschriebenen Ausführungsbeispiel die Magnetisierungsrichtung der Permanentmagnete 7 wechselt. Die Hälfte aller Permanentmagnete 7 ist so magnetisiert, daß der magnetische Nordpol der Achse 6 zugewandt ist, während bei der anderen Hälfte der Permanentmagnete 7 der magnetische Südpol der Achse 6 zugewandt ist. Jeweils benachbarte Permanentmagnete 7 haben entgegengesetzte Magnetisierungsrichtung.

Jeder Polstern 60 besitzt, wie in der Figur 11 dargestellt, eine Grundfläche 62 und eine Anzahl von rechtwinklig dazu angeordneten Polen 63. Die Zahl der Pole 63 eines Polsterns 60 kann beispielsweise 16, 12, 8 oder 6 betragen. Die Pole 63 haben beispielsweise trapezförmige Gestalt, so daß der Polstern 60 insgesamt eine Gestalt wie ein Kronenrad aufweist, was aus der Figur 11 deutlich hervorgeht. Zwischen benachbarten Polen 63 besteht jeweils eine Lücke 64.

Es wurde schon erwähnt, daß der eine Polstern 60 gegenüber dem anderen Polstern 60 um 180° gewendet ist, so daß sich die beiden Polsterne 60 so gegenüberliegen, daß ihre Pole 63 einander zugewandt sind. Vorteilhaft sind die Polsterne 60 dabei so gegeneinander verdreht, daß jeder Pol 63 in eine Lücke 64 des gegenüberliegenden Polsterns 60 eingreift. Dies ist aus der Figur 12 leicht erkennbar, in der eine Abwicklung der Mantelfläche des durch die beiden Polsteme 60 gebildeten Käfigs dargestellt ist. Zwischen den Polen 63 der beiden Polsteme 60 entsteht durch diese Anordnung der beiden Polsterne 60 ein Luftspalt 65, der eine Mäanderform aufweist. Der nach dieser vorteilhaften Ausführungsform aufgebaute Spannungsgenerator 9 zeichnet sich dadurch aus, daß er schon bei kleiner Drehzahl eine relativ große elektrische Leistung abgibt.

Das erfindungsgemäße Prinzip läßt sich bei allen derartigen Sportgeräten anwenden, bei denen Räder 5 um feststehende Achsen 6 drehbar sind und beim bestimmungsgemäßen Gebrauch auch in Drehung versetzt werden.

Die Nachrüstung einer Beleuchtungseinrichtung in ein schon vorhandenes Sportgerät 1 ist gleichfalls möglich mit der Ausführungsform nach den Figuren 2, 4 und 5.

Ausführungsbeispiel nach den Fig. 8 bis 12 sind alle zum Betrieb der Beleuchtungseinrichtung nötigen Elemente innerhalb des Rades 5 angeordnet sind, so daß jeweils nur wenigstens ein im Sportgerät vorhandenes Rad gegen ein solches ausgewechselt werden, bei dem die vorstehend beschriebene Erfindung eingebaut ist, während die Achse 6 weiterhin verwendet werden kann. Eine derartige Nachrüstung eines Sportgeräts ist ohne großen Aufwand möglich.

## Patentansprüche

1. Der Fortbewegung einer einzelnen Person dienendes Sportgerät mit einem Räder (5), Rollen und dergleichen aufweisenden Laufwerk (3), bei dem im Laufwerk (3) Achsen (6) angeordnet sind, um die sich die Räder (5) und dergleichen drehen können, und mit einer in einem Rad (5), enthaltenen Beleuchtungseinrichtung, bei der durch das Zusammenwirken eines Magnets (7) mit einer um die Achse (6) gewickelten Spule (8), die zusammen einen Spannungsgenerator (9) bilden, elektrische Energie erzeugbar ist, die mittels lichtemittierenden Elementen (10) in sichtbares Licht umwandelbar ist, **dadurch gekennzeichnet, daß** der Spannungsgenerator (9) folgende Elemente umfasst:
- zwei mit der Achse (6) starr verbundene Polsterne (60), deren jeder eine Anzahl von Polen (63) aufweist, zwischen denen Lücken (64) bestehen, wobei die Polsterne (60) so angeordnet sind, daß jeder Pol (63) eines Polsterns (60) in eine Lücke (64) des gegenüberliegenden Polsterns (60) so eingreift, daß zwischen den Polen (63) der beiden Polsterne (60) ein Luftspalt (65) gebildet wird,
- einem die Pole (63) der beiden Polsterne (60) umgreifenden Ring (61), der mit dem Rad (5) fest verbunden ist und auf dessen Innenseite mehrere Magnete (7) angeordnet sind, wobei Permanentmagnete als Magnete (7) dienen, und
wobei die lichtemittierenden Elemente Leuchtdioden (10) sind, die zu zwei Gruppen parallel geschaltet sind, wobei die erste Gruppe zur zweiten Gruppe antiparallel geschaltet ist.

2. Sportgerät nach Anspruch 1, **dadurch gekennzeichnet, daß** die Spule (8) aus einer Wicklung (11) und einem Weicheisen-Magnetkreis (12) besteht und daß die Gruppen von Leuchtdioden (10) unmittelbar an die Wicklung (11) der Spule (8) angeschlossen sind, und daß die Wicklung (11) einen Innenwiderstand aufweist, der so bemessen ist, daß durch ihn der Strom durch die Leuchtdioden (10) den für diese Leuchtdioden (10) zulässigen Grenzwert nicht überschreitet.

3. Sportgerät nach Anspruch 1, **dadurch, gekennzeichnet, dass** die Polsterne (60) so angeordnet sind, daß sie eine Art Käfig bilden, wobei die Spule (8) innerhalb des Käfigs angeordnet ist.

4. Sportgerät nach Anspruch 1, **dadurch, gekennzeichnet, dass** die Magnete so an dem Ring (61) angeordnet sind, dass deren Magnetisierungsrichtung wechselt.

5. Beleuchtungseinrichtung für ein der Fortbewegung einer einzelnen Person dienendes Sportgerät mit einem Räder (5), Rollen und dergleichen aufweisenden Laufwerk (3), bei dem im Laufwerk (3) Achsen (6) angeordnet sind, um die sich die Räder (5) und dergleichen drehen können, wobei die Beleuchtungseinrichtung in einem Rad (5) enthalten ist und lichtemittierende Elemente (10) und einen Spannungsgenerator (9) mit einem Magnet (7) und mit einer um die Achse (6) gewickelten Spule (8) umfasst, die zusammen den Spannungsgenerator (9) bilden, durch den elektrische Energie erzeugbar ist, die mittels der lichtemittierenden Elemente (10) in sichtbares Licht umwandelbar ist, **dadurch gekennzeichnet, daß** der Spannungsgenerator (9) folgende Elemente umfasst:
- zwei mit der Achse (6) starr verbundene Polsterne (60), deren jeder eine Anzahl von Polen (63) aufweist, zwischen denen Lücken (64) bestehen, wobei die Polsterne (60) so angeordnet sind, daß jeder Pol (63) eines Polsterns (60) in eine Lücke (64) des gegenüberliegenden Polsterns (60) so eingreift, daß zwischen den Polen (63) der beiden Polsterne (60) ein Luftspalt (65) gebildet wird,
- einem die Pole (63) der beiden Polsterne (60) umgreifenden Ring (61), der mit dem Rad (5) fest verbunden ist und auf dessen Innenseite mehrere Magnete (7) angeordnet sind, wobei Permanentmagnete als Magnete (7) dienen, und
wobei die lichtemittierenden Elemente Leuchtdioden (10) sind, die zu zwei Gruppen parallel geschaltet sind, wobei die erste Gruppe zur zweiten Gruppe antiparallel geschaltet ist.

## Claims

1. Sports device serving for the forward progression of a single person and provided with running gear (3) comprising wheels (5), rollers or similar, in which the running gear (3) is fitted with axles (6), about which the wheels (5) or similar can rotate, and with a lighting device contained in a wheel (5), in which by means of the combined action of a magnet (7) and a coil (8) wound round the axle (6) which together constitute a voltage generator (9), electrical energy can be generated which can be converted into visible light by means of light-emitting elements (10), **characterized in that** the voltage generator (9) includes the following elements:
- two rotating field magnets (60) fixed to the axle (6), each bearing a number of poles (63) with spaces (64) between them, the rotating field magnets (60) being so arranged that each pole (63) of a rotating field magnet (60) engages with a space (64) in the opposite rotating field magnet (60) in such a way that an air space (65) is formed between the poles (63) of the two rotating field magnets (60),
- a ring (61) surrounding the poles (63) of the two rotating field magnets (60), firmly fastened to the wheel (5) and bearing on its inner surface several magnets (7), the function of these magnets (7) being provided by permanent magnets, and
the light-emitting elements being light-emitting diodes (10) connected in parallel to two groups, the first of these two groups being connected in antiparallel to the second group.

2. Sports device according to Claim 1, **characterized in that** the coil (8) consists of a winding (11) and a soft iron magnet (12) and that the groups of light-emitting diodes (10) are connected directly to the winding (11) of the coil (8), that the winding (11) displays an internal resistance so calculated that the current passing through the light-emitting diodes (10) does not exceed the permissible limit value for these light-emitting diodes (10).

3. Sports device according to Claim 1, **characterized in that** the rotating field magnets (60) are arranged to form a sort of cage, the coil (8) being located inside the cage.

4. Sports device according to Claim 1, **characterized in that** the magnets are arranged on the ring (61) in such a way that their directions of magnetization alternate.

5. Lighting device for a sports device serving for the forward progression of a single person and provided with running gear (3) comprising wheels (5), rollers or similar, in which axles (6) are arranged in the running gear (3), about which the wheels (5) or similar can rotate, the illumination device being contained in a wheel (5) and including light-emitting elements (10) and a voltage generator (9) with a magnet (7) and a coil (8) wound round the axle (6), together constituting a voltage generator (9) by which electrical energy can be generated which can be converted into visible light by means of the light-emitting elements (10), **characterized in that** the voltage generator (9) includes the following elements:
- two rotating field magnets (60) fixed to the axle (6), each bearing a number of poles (63) with spaces (64) between them, the rotating field magnets (60) being so arranged that each pole (63) of a rotating field magnet (60) engages with a space (64) in the opposite rotating field magnet (60) in such a way that an air space (65) is formed between the poles (63) of the two rotating field magnets (60),
- a ring (61) surrounding the poles (63) of the two rotating field magnets (60), firmly fastened to the wheel (5) and bearing on its inner surface several magnets (7), the function of these magnets (7) being provided by permanent magnets, and the light-emitting elements being light-emitting diodes (10) connected in parallel to two groups, the first of these two groups being connected in antiparallel to the second group.

## Revendications

1. Appareil de sport servant au déplacement d'une seule personne et comprenant un mécanisme de roulement (3) composé de roues (5), de roulettes et de pièces similaires, pour lequel des axes (6) sont placés dans ledit mécanisme de roulement (3) afin de pouvoir faire tourner les roues (5) et les pièces similaires, et comprenant par ailleurs un dispositif d'éclairage contenu dans une roue (5) avec lequel il est possible de produire, par l'action conjuguée d'un aimant (7) et d'une bobine (8) enroulée autour de l'axe (6) formant ensemble un générateur de tension (9), de l'énergie électrique qui peut être transformée en lumière visible à l'aide d'éléments électroluminescents (10), **caractérisé en ce que** le générateur de tension (9) comprend les éléments suivants :
- deux croisillons d'induit (60) reliés de façon rigide à l'axe (6), comprenant chacun un certain nombre de pôles (63) entre lesquels se trouvent des interstices (64), les croisillons d'induit (60) étant disposés de façon à ce que chaque pôle (63) d'un croisillon d'induit (60) avance dans un interstice (64) du croisillon d'induit (60) opposé de manière à ce que se forme un entrefer (65) entre les pôles (63) des deux croisillons d'induit (60),
- un anneau (61), enveloppant les pôles (63) des deux croisillons d'induit (60), qui est solidement relié à la roue (5) et sur la face interne duquel sont placés plusieurs aimants (7) constitués par des aimants permanents, et
les éléments électroluminescents étant des diodes lumineuses (10) connectées en parallèle à deux groupes, le premier groupe étant connecté en antiparallèle au deuxième groupe.

2. Appareil de sport selon la revendication 1, **caractérisé en ce que** la bobine (8) se compose d'un enroulement (11) et d'un circuit magnétique en fer doux (12) et **en ce que** les groupes de diodes lumineuses (10) sont directement connectés à l'enroulement (11) de la bobine (8), et **en ce que** l'enroulement (11) comprend une résistance interne qui est dimensionnée de manière à ce que le courant passant à travers les diodes lumineuses (10) ne dépasse pas la valeur limite admise pour ces diodes lumineuses (10).

3. Appareil de sport selon la revendication 1, **caractérisé en ce que** les croisillons d'induit (60) sont placés de façon à former une sorte de cage, la bobine (8) se trouvant à l'intérieur de la cage.

4. Appareil de sport selon la revendication 1, **caractérisé en ce que** les aimants sont disposés de telle façon sur l'anneau (61) que leur direction d'aimantation change.

5. Dispositif d'éclairage destiné à un appareil de sport servant au déplacement d'une seule personne et comprenant un mécanisme de roulement (3) composé de roues (5), de roulettes et de pièces similaires, pour lequel des axes (6) sont placés dans ledit mécanisme de roulement (3) afin de pouvoir faire tourner les roues (5) et les pièces similaires, le dispositif d'éclairage étant contenu dans une roue (5) et comprenant des éléments électroluminescents (10) ainsi qu'un générateur de tension (9), composé d'un aimant (7) et d'une bobine (8) enroulée autour de l'axe (6) formant ensemble le générateur de tension (9), qui permet de produire de l'énergie électrique pouvant être transformée en lumière visible à l'aide des éléments électroluminescents (10), **caractérisé en ce que** le générateur de tension (9) comprend les éléments suivants :
- deux croisillons d'induit (60) reliés de façon rigide à l'axe (6), comprenant chacun un certain nombre de pôles (63) entre lesquels se trouvent des interstices (64), les croisillons d'induit (60) étant disposés de façon à ce que chaque pôle (63) d'un croisillon d'induit (60) avance dans un interstice (64) du croisillon d'induit (60) opposé de manière à ce que se forme un entrefer (65) entre les pôles (63) des deux croisillons d'induit (60),
- un anneau (61), enveloppant les pôles (63) des deux croisillons d'induit (60), qui est solidement relié à la roue (5) et sur la face interne duquel sont placés plusieurs aimants (7) constitués par des aimants permanents, et
les éléments électroluminescents étant des diodes lumineuses (10) connectées en parallèle à deux groupes, le premier groupe étant connecté en antiparallèle au deuxième groupe.
